# EUROPÄISCHE PATENTSCHRIFT

(11) **EP 1 945 440 B1**
(45) Veröffentlichungstag und Bekanntmachung des Hinweises auf die Patenterteilung: **25.05.2011**
(21) Anmeldenummer: 06805756.1
(22) Anmeldetag: 18.09.2006
(51) Int. Cl.: B29C 65/02

(54) **VERFAHREN ZUR HERSTELLUNG EINES TRANSPARENTEN KÖRPERS MIT EINEM EINGESCHLOSSENEN GEGENSTAND**
METHOD FOR PRODUCING A TRANSPARENT BODY THAT INCORPORATES AN OBJECT
PROCEDE POUR PRODUIRE UN CORPS TRANSPARENT AVEC UN OBJET INCLUS

(30) Priorität: 20.10.2005 DE 102005050320
(43) Veröffentlichungstag der Anmeldung: 23.07.2008
(73) Patentinhaber: MONTBLANC-SIMPLO GmbH, D-22525 Hamburg (DE)
(72) Erfinder: PODSZUWEIT, Dietmar, 22455 Hamburg (DE); MARTENS, Manfred, 21109 Hamburg (DE); WUTTKE, Holger, 22457 Hamburg (DE)
(74) Vertreter: Kopf, Korbinian Paul
(86) Internationale Anmeldenummer: PCT/EP2006/009064
(87) Internationale Veröffentlichungsnummer: WO 2007/045316

(56) Entgegenhaltungen:
- DE-A1- 19 617 621
- FR-A1- 2 637 532
- US-A- 2 455 215
- US-A- 3 596 317
- US-A- 4 078 962

## Beschreibung

### Technisches Gebiet

Die vorliegende Erfindung betrifft ein Herstellungsverfahren zum Einschließen eines Gegenstands in eine mehrteilige und transparente Hüllform sowie einen transparenten Körper mit einem eingeschlossenen Gegenstand.

### Hintergrund der Erfindung

Im Luxusgüterbereich werden zur optischen Verschönerung von Edelsteinen häufig optische Effekte, wie beispielsweise ein Lupeneffekt bzw. Vergrößerungs- oder Verkleinerungseffekte, angewendet. Das Grundprinzip dabei besteht darin, einen Gegenstand in einen transparenten Körper, bzw. in eine Hüllform, einzufügen und zu positionieren und anschließend durch formgebende Bearbeitung, wie beispielsweise Drehen und/oder Polieren der transparenten Hüllform optische Effekte zu verleihen.

Bei heutigen Verfahren zum Einbringen eines Gegenstands in eine transparente Hüllform werden die Hüllformen aufgeschmolzen und darin ein Gegenstand hinzugefügt. Dabei ist jedoch die Positionierung und Ausrichtung des Gegenstands in der Hüllform problematisch, da dieser während des Schmelzvorgangs der Hüllformen von außen gehaltert werden muss und somit Fügenähte bzw. Narben entstehen, welche dauerhaft sichtbar bleiben.

US 4,078,962 beschreibt eine Vakuumpresse zum Fixieren und Laminieren graphischer Kunstobjekte, wie beispielsweise Fotografien. Dabei wird ein zu laminierender Gegenstand kurzzeitig mittels eines Vakuums zwischen zwei Membranen eingequetscht.

DE 196 17 621 A1 beschreibt ein Verfahren zum Herstellen eines Laminats mit mindestens drei aufeinanderfolgenden Schichten und mindestens einem zumindest teilweise in die mittlere der drei Schichten eingebetteten funktionaten Bauteil.

### Darstellung der Erfindung

Es ist eine Aufgabe der vorliegenden Erfindung, ein Verfahren zum Einschließen eines dreidimensionalen Gegenstands in einem transparenten Hüllkörper sowie einen transparenten Körper zur Verfügung zu stellen.

Diese Aufgabe wird mit einem Verfahren gemäß Anspruch 1 und einem transparenten Körper gemäß Anspruch 17 gelöst.

Gemäß einer beispielhaften Ausführungsform der Erfindung wird ein Herstellungsverfahren zum Einschließen eines Gegenstands in einen mehrteiligen, zumindest teilweise transparenten Körper bereitgestellt. Bei dem erfindungsgemäßen Verfahren wird eine erste Hüllform mit einer ersten Fügefläche und eine zweite Hüllform mit einer zweiten Fügefläche bereitgestellt. Auf bzw. im Bereich der ersten Fügefläche der ersten Hüllform wird ein Gegenstand ausgerichtet. Die erste Hüllform und die zweite Hüllform werden anschließend zusammengeführt, so dass der Gegenstand zwischen der ersten Fügefläche und der zweiten Fügefläche verharrt oder auch temporär festgeklemmt wird. Im Falle, dass der Gegenstand in einer definierten Lage auf der ersten Fügefläche ausgerichtet wird, lässt sich erreichen, dass er beim Zusammenführen der ersten Hüllform und der zweiten Hüllform in dieser definierten Lage verharrt. Die erste Fügefläche der ersten Hüllform wird dann mit der zweiten Fügefläche der zweiten Hüllform verschmolzen, indem die erste Fügefläche und zweite Fügefläche mit einer Druckkraft und einer Temperatur beaufschlagt werden, so dass die erste Hüllform an der ersten Fügefläche in die zweite Hüllform an der zweiten Fügefläche frei von einer sichtbaren Fügenaht übergeht.

In einer weiteren beispielhaften Ausführungsform wird ein transparenter Körper mit einem eingeschlossenen Gegenstand geschaffen, der eine erste Hüllform mit einer ersten Fügefläche, eine zweite Hüllform mit einer zweiten Fügefläche und den Gegenstand selbst aufweist. Die erste Fügefläche der ersten Hüllform kann dabei auch derart ausgebildet werden, dass der Gegenstand auf der ersten Fügefläche in einer definierten Lage positionierbar ist. Die erste Fügefläche der ersten Hüllform und die zweite Fügefläche der zweiten Hüllform sind dabei derart zusammengefügt, dass ein Bereich zwischen den Hüllformen frei von einer sichtbaren Fügenaht ist.

Mit der vorliegenden Erfindung wird ein Herstellungsverfahren geschaffen, mit dem beliebige dreidimensionale Objekte in einer mehrteiligen, transparenten Hüllform eingeschlossen und ausgerichtet, bzw. positioniert werden können und während des Herstellvorgangs keinerlei störende Fügenähte entstehen. Gerade beim Einfügen von Edelsteinen ist der Betrachtungswinkel äußerst wichtig, der durch die erfindungsgemäße genaue Positionierung vorbestimmt werden kann. Mit dieser exakten Position der dreidimensionalen Objekte können anschließend durch bestimmte Bearbeitungs- und insbesondere Dreh- und/oder Poliertechniken verschiedenste optische Effekte erzeugt werden, wie beispielsweise Vergrößerungen, Verkleinerungen oder Verzerrungen. Darüber hinaus ist das erfindungsgemäße Herstellungsverfahren in einer einfachen Art und Weise ausgestaltet, so dass auf komplizierte Steuertechnologien oder aufwendige Konstruktion verzichtet werden kann.

Im folgenden sind unter dem Begriff "dreidimensionale" Gegenstände solche Körper zu subsumieren, die eine größere Höhe, Breite bzw. Dicke als etwa 0,1 cm aufweisen. Mit dem Begriff Fügenaht wird eine Trennlinie der jeweiligen Hüllformen untereinander verstanden.

In einer weiteren beispielhaften Ausführungsform des Herstellungsverfahrens wird die erste Hüllform, die zweite Hüllform und der Gegenstand in einem Führungsschacht angeordnet. Hierzu können diese drei Elemente in einem vorgelagerten Bearbeitungsschritt beispielsweise temporär miteinender zu einem zusammenhängenden Gebilde verbunden werden, so dass der Gegenstand zwischen den beiden Fügeflächen provisorisch und temporär fixiert bzw. eingeklemmt wird. Die Verbindung kann dabei beispielsweise mittels eines Randes an einer der Hüllform bewerkstelligt werden, welche mit eine zugehörigen Erhebung an der anderen Hüllform in Eingriff gelangt, worauf jedoch später noch genauer eingegangen wird. Indem das so gebildete zusammenhängende Gebilde in den Führungsschachts eingebracht wird, kann ein bestimmter Bewegungsablauf während des Fügevorgangs definiert und vorgegeben werden. Der Führungsschacht weist eine genau definierte lichte Weite auf, welche auf die Abmessungen des zusammenhängenden Gebilde aus den Hüllformen und dem Gegenstand abgestimmt ist, sodass dieses zusammenhängenden Gebilde in dem Führungsschacht sehr exakt beweglich einpassbar ist.

In einer weiteren beispielhaften Ausführungsform des Verfahrens fährt in den Führungsschacht zumindest ein Stößelelement ein, um somit mittels des Einfahrens eine Druckkraft auf die erste Hüllform und/oder die zweite Hüllform aufzubringen. Mittels des Führungsschachts und des Stößels kann somit eine definierte Druckkraft erzeugt werden, die sich entlang des Führungsschachts ausrichtet, um auf zumindest eine der beiden Hüllformen zu wirken. Eine unerwünschte schräge Kraftbeaufschlagung, die beispielsweise den ausgerichteten Gegenstand verschieben würde, kann damit vermieden werden.

In einer weiteren beispielhaften Ausführungsform des Verfahrens weist der Gegenstand eine Fläche auf, die rechtwinklig zu einer Wandfläche des Führungsschachts ausgerichtet wird. Damit wird die Fläche des Gegenstands ebenfalls rechtwinklig zur dem Bewegungsablauf in dem Führungsschacht während des Fügevorgangs ausgerichtet, womit eine Verschiebung des ausgerichteten Gegenstands verhindert werden kann. Bei Edelsteinen bzw. bei Diamanten wird diese Fläche auch "Spiegel" genannt.

In einer weiteren beispielhaften Ausführungsform der Erfindung erzeugt das Stößelelement die Druckkraft parallel zur Wandfläche des Führungsschachts. Eine Verschiebung des ausgerichteten Gegenstands kann somit vermieden werden, so dass keine ungewollten Querkräfte entstehen.

In einer weiteren beispielhaften Ausführungsform des Herstellungsverfahrens wird vor oder während des Verschmelzens der Hüllformen ein Vakuum gebildet, womit Lufteinschlüsse vermieden werden können. Damit kann eine klare bzw. klar transparente Hüllform bereitgestellt werden, ohne den Blick auf den eingepressten bzw. eingeschweißten Gegenstand durch beispielsweise Luftblasen zu stören. Durch die Vakuumbildung lässt sich ferner die erforderliche Verpresskraft reduzieren, das es in diesem Falle nicht erforderlich ist, eingeschlossene Luftpolster zusammenzupressen. Hierdurch sinken außerdem die Spannungen in der Fügenaht, da keine unter Druck stehenden Lufteinschlüsse mehr vorhanden sind.

In einem weiteren Ausführungsbeispiel wird der Gegenstand auf der ersten Fügefläche der ersten Hüllform zentriert, wobei der Gegenstand rotationssymmetrisch ausgebildet ist. Mit einem zentrierten Gegenstand kann eine gleichmäßige Kraftverteilung über die Querschnittsfläche der Fügenaht erreicht werden, sodass keine Querkräfte auftreten, die den ausgerichteten Gegenstand während des Fügevorgangs verschieben können.

In einer weiteren beispielhaften Ausführungsform des Verfahrens wird der Gegenstand bezüglich der ersten Fügefläche der ersten Hüllform und der zweiten Fügefläche der zweiten Hüllform in radialer Richtung volumensymmetrisch positioniert. Damit wird erreicht, dass während des Schmelzvorgangs und der Ausübung einer Druckkraft keine unsymmetrischen Kräfte, bzw. keine Querkräfte auftreten, die ansonsten den exakt positionierte Gegenstand in einer willkürlichen Richtung verschieben würden. Indem sich um den Gegenstand das gleiche Volumen bzw. die gleiche Masse an Hüllformmaterial befindet, kann beispielsweise bei parallel einwirkenden Druckkräften keine Veränderung der Position des Gegenstands entstehen.

In einer weiteren beispielhaften Ausführungsform des Verfahrens wird ein optischer Effekt mittels Bearbeitung, insbesondere mittels Drehen und/oder Polieren einer ersten Hüllfläche der ersten Hüllform und/oder einer zweiten Hüllfläche der zweiten Hüllform erreicht. Unter diesen Hüllflächen wird dabei die Oberfläche der Hüllformen verstanden. Durch die Herstellung gekrümmter Flächen der transparenten Hüllformen können beliebige optische Effekte erreicht werden, die für den Verbraucher sehr interessant wirken. Ein Vergrößerungseffekt kann beispielsweise einen Edelstein kostbarer bzw. größer erscheinen lassen. Dementsprechend sind auch Verkleinerungs- oder Verzerrungseffekte denkbar.

In einer weiteren beispielhaften Ausführungsform des Verfahrens wird die erste Hüllform und die zweite Hüllform mittels eines Spritzgussverfahrens hergestellt. Gerade bei Verwendung von Kunststoffen bzw. transparenten Kunststoffen eignet sich insbesondere das Spritzgussverfahren, um die Grundformen bzw. die Hüllformen herzustellen.

Erfindungsgemäß wird zumindest eine der Fügeflächen der beiden Hüllformen diamantiert, so dass die diamantierten Fügefläche eine glatte Oberfläche aufweist. Diamantieren bedeutet eine glatte Oberfläche beispielsweise mittels Diamant-Drehbearbeitungswerkzeugen herzustellen. Damit erreicht man eine äußerst glatte Oberflächenstruktur, vergleichbar mit einer riefenfrei polierten Oberfläche. Mit dieser glatten Oberfläche kann eine klare, nicht sichtbare Fügenaht erzeugt werden.

Sofern hier der Bergriff "glatt" verwendet wird, so bedeutet dies in diesem Zusammenhang, dass sich eine Rauhigkeit von weniger als R_{z} = 1 µm einstellt. Um die Fügenaht nach außen hin nicht in Erscheinung treten zu lassen, ist die Transparenz der Oberfläche jedoch mindestens genauso bedeutsam, wie deren glatte Beschaffenheit. So sollte die Oberfläche hochglänzend und nicht matt sein.

In einer weiteren beispielhaften Ausführungsform wird zumindest eine der Fügeflächen der beiden Hüllformen so bearbeitet, dass eine hochglänzende, spiegelblanke, hochtransparente Oberfläche entsteht. Mit dieser Oberfläche kann eine Fügenaht entstehen, die keine Reflexionen von eventuell vorhandenen Rauhigkeiten erzeugt und somit nicht sichtbar ist.

Wie bereits zuvor angedeutet, kann in einer weiteren beispielhaften Ausführungsform eine der beiden Hüllformen einen zumindest abschnittsweise umlaufenden Rand aufweisen, wobei die andere Hüllform eine Erhebung aufweist.

Die beiden Hüllformen können dann derart zusammengeführt werden, dass der Rand mit der Erhebung formschlüssig im Eingriff steht. Die erste Hüllform und die zweite Hüllform stehen somit formschlüssig und stabilisiert in Verbindung, wobei im Inneren ein Gegenstand exakt positioniert und fixiert werden kann. Im anschließenden Fügevorgang bzw. während des Verschmelzens kann der Gegenstand besser in seiner ausgerichteten Position gehalten werden.

In einer weiteren beispielhaften Ausführungsform ist zumindest der Rand der ersten Hüllform oder zweiten Hüllform und/oder die Erhebung der ersten Hüllform oder zweiten Hüllform konisch ausgebildet. Damit kann eine Presspassung, bzw. ein Formschluss gebildet werden, der die beiden ersten und zweiten Hüllformen in der zusammengeführten Position verharren lässt und somit eine einfachere Handhabung der Hüllkörper und eine genauere Positionierung ermöglicht.

In einer weiteren beispielhaften Ausführungsform weist der Rand der ersten oder zweiten Hüllform Öffnungen auf, um das Entweichen von Luft zu ermöglichen. Während des Pressvorgangs kann somit im Inneren der Hüllformen eingeschlossene Luft entweichen, so dass beim Verschmelzen sich keine Luftblasen bilden können und sich somit eine klare transparente Materialbeschaffenheit bilden kann.

In einer weiteren beispielhaften Ausführungsform des Verfahrens erfolgt das Ausrichten des Gegenstands, indem der Gegenstand mittels einer Positionierform, die den Gegenstand annähernd abbildet, um ihn darin zu positionieren, in der ersten Hüllform oder der zweiten Hüllform zentriert wird. Falls beispielsweise der Gegenstand auf der ersten Fügefläche der ersten Hüllform aufliegt, kann mittels der Positionierform beispielsweise in der zweiten Fügefläche, während sich die Hüllformen aufeinander zu bewegen, der Gegenstand in die Positionierform einfahren und somit ausrichten. Alternativ dazu ist es auch möglich, den Gegenstand in die in der ersten Hüllform ausgebildete Positionierform einzulegen und den Gegenstand in dieser Stellung temporär zu fixieren, indem die Fügefläche der zweiten Hüllform so weit an den Gegenstand angenährt wird, bis er mit dem Gegenstand in Anlage gelangt, um ihn in seiner Stellung festzuklemmen.

In einer weiteren beispielhaften Ausführungsform des Verfahrens wird während des Schritts des Verschmelzens die erste Hüllform und die zweite Hüllform derart erwärmt, dass sie einen teigigen Zustand einnehmen. Unter einem teigigen Zustand wird der meist zähflüssige Übergangsbereich zwischen festem und flüssigem Aggregatszustand eines Mediums verstanden. Mit dem erfindungsgemäßen Verfahren ist es nicht unbedingt erforderlich, einen Schmelzzustand zu schaffen, in dem die zu fügenden Massen einen flüssigen Zustand einnehmen müssen. Da der Führungsschacht sehr genau auf die Abmessungen der beiden Hüllformen abgestimmt ist, und das Material somit nicht entweichen beziehungsweise wegfließen kann, besteht die Möglichkeit unter Beaufschlagung von Druck einen teigigen Zustand zu schaffen, mit dem beide Hüllformen zusammengeschweißt werden können. Mittels dieses teigigen Zustands kann der Gegenstand in der definierten Position gehalten und ein Abdriften aus der definierten Position in eine willkürliche Richtung vermieden werden.

In einer weiteren beispielhaften Ausführungsform des transparenten Körpers weist dieser ferner ein Befestigungselement zum Befestigen an einem Halterelement auf. Das Halterelement kann dabei aus der Gruppe bestehend aus Füllfederhalter, Stifte, Uhren und Schmuck ausgewählt sein.

In einer weiteren beispielhaften Ausführungsform des transparenten Körpers wird dieser gemäß den oben beschriebenen Ausführungsbeispielen des erfindungsgemäßen Herstellungsverfahrens hergestellt.

In einer beispielhaften Ausführungsform des Verfahrens wird während des Verschmelzens eine Temperatur von 120° C bis 160° C, bevorzugt etwa 140° C gewählt. Die Temperatur sollte dabei für einen Zeitraum von 1 bis 5 Sekunden, bevorzugt 3 Sekunden aufrecht erhalten werden. Die Stößelelemente beaufschlagen die zufügenden Hüllformen dabei in einem Druckbereich von 180 bis 260 bar, bevorzugt etwa 230 bar. Der Druck wird während des Abkühlens bei etwa 90° C gehalten, bis das Material der Hüllformen einen Festzustand erreicht. Der Druck, der während des Fügevorgangs bis zum Erreichen der Verschmelztemperatur herrscht, kann 60 bis 80 bar, bevorzugt etwa 70 bar betragen. Bevorzugt wird für die Hüllformen Kunststoff, wie beispielsweise Plexiglas 7H glasklar oder PMMA, verwendet. Natürlich können bei unterschiedlichen Materialien andere Temperaturbereiche, Druckbereiche oder Zeitdauern vorteilhaft sein.

### Kurze Beschreibung der Zeichnungen

Im Folgenden werden zur weiteren Erläuterung und zum besseren Verständnis der vorliegenden Erfindung verschiedene Ausführungsbeispiele unter Bezugnahme auf die beigefügten Zeichnungen näher beschrieben. Es zeigen:
Fig. 1 eine schematische Darstellung einer beispielhaften Ausführungsform des erfindungsgemäßen Herstellungsverfahrens;
Fig. 2 eine weitere schematische Abbildung einer beispielhaften Ausführungsform des Verfahrens;
Fig. 3 eine weitere beispielhafte schematische Darstellung der ersten und zweiten Formhüllen;
Fig. 4 und 5 dreidimensionale beispielhafte Darstellungen einer ersten und zweiten Hüllform;
Fig. 6 zeigt eine beispielhafte schematische Darstellung eines Endprodukts des Herstellungsverfahrens.

Gleiche oder ähnliche Komponenten in unterschiedlichen Figuren sind mit gleichen oder entsprechenden Bezugsziffern versehen.

Die Darstellungen in den Figuren sind schematisch und nicht maßstäblich, können jedoch qualitative Größenverhältnisse wiedergeben.

### Detaillierte Beschreibung von beispielhaften Ausführungsformen

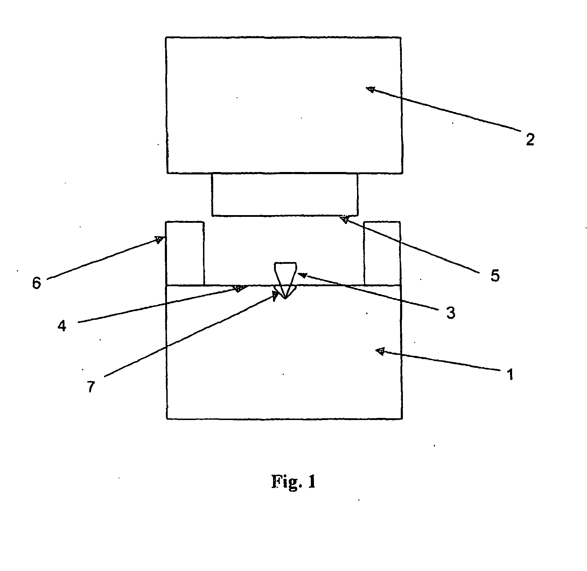

Fig. 1 zeigt eine beispielhafte Anordnung des erfindungsgemäßen Herstellungsverfahrens zum Einschließen eines Gegenstands in eine mehrteilige und transparente Hüllform. Ein Gegenstand 3 kann dabei auf einer ersten Fügefläche 4 einer ersten Hüllform 1 ausgerichtet werden und mittels Zusammenführen der ersten Hüllform mit einer zweiten Hüllform 2 festgehalten und umschlossen werden. Die erste Fügefläche 4 der ersten Hüllform 1 und die zweite Fügefläche 5 der zweiten Hüllform 2 können anschließend mittels Druckkraft- und Temperaturbeaufschlagung verschmolzen werden, so dass ein Bereich zwischen den Hüllformen 1, 2 von einer sichtbaren Fügenaht frei ist. Die Fügeflächen können dabei vorzugsweise planparallel gefertigt und ausgerichtet werden.

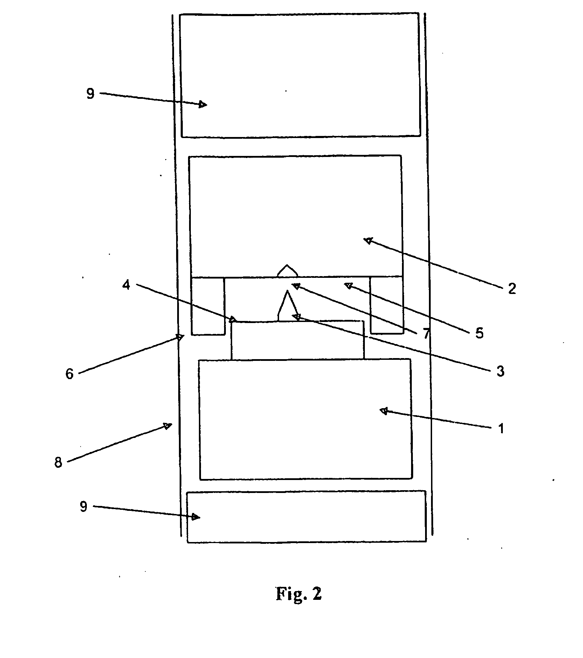

Im folgenden wird unter Bezugnahme auf die Fig. 1 eine beispielhafte Anordnung zur Durchführung des erfindungsgemäßen Verfahrens ausführlich beschrieben. Auf einer unteren und transparenten Hüllform 1 mit einer Fügefläche 4 kann ein einzuschließender Gegenstand 3 in einer Positionierform 7 eingelegt und infolge der Lage und Form der Positionierform 7 ausgerichtet werden. Eine zweite obere und transparente Hüllform 2 kann im Anschluss mit der unteren Hüllform 1 in Eingriff gebracht werden. Dabei ist auf der zweiten oberen transparenten Hüllform 1 eine Erhebung mit einer Fügefläche 5 geschaffen. Die Erhebung 5 kann nunmehr mit einem Rand 6 der ersten Hüllform 1 in Eingriff gebracht werden, wodurch die Hüllformen 1, 2 und der Gegenstand 3 sich zu einem zusammenhängenden Gebilde vereinen. Dadurch kann vor dem Schmelzvorgang der Gegenstand 3 positioniert und festgehalten werden. Nachdem der Gegenstand 3 temporär fixiert worden ist, wird nun unter Einwirkung einer Druckkraft in einem Führungsschacht (siehe Fig. 2) eine bestimmte Temperatur erzeugt, beispielsweise bei Kunststoff zwischen 120° C und 160° C, die ein Zusammenschmelzen bzw. ein Zusammenfügen der Fügefläche 4 und 5 bzw. der oberen Hüllform 2 und der unteren Hüllform 1 ermöglicht.

Die Temperatur kann dabei beispielsweise drei Sekunden aufrecht erhalten werden und unter gleichbleibendem Druck auf 90° C wieder abkühlen, bis das Material sich wieder verfestigt hat.

Damit erhält man einen einteiligen Gegenstand, der zwar ursprünglich aus mehreren Teilen besteht, optisch jedoch als ein Körper dargestellt wird, der in sich einen Gegenstand aufweist.

Für die Hüllformen kann beispielsweise Plexiglas, 7 H glasklar, oder PMMA (Polymethylmethacrylat) verwendet werden. Eine bevorzugte Erweichungstemperatur kann beispielsweise 140° C sein. Die Stößel können in einer bevorzugten Ausführungsform des Verfahrens einen Druck von 230 bar im Führungsschacht erzeugen.

Fig. 2 veranschaulicht eine weitere Ausführungsform des Verfahrens, in der ein leicht modifizierter Verfahrensaufbau in einen Führungsschacht 8 eingebracht worden ist. Bei dem in der Fig. 2 gezeigten Verfahrensaufbau ist die Positionierform 7 in der oberen Hüllform 2 ausgebildet, so dass der Gegenstand 3 zunächst auf die Fügefläche 4 der unteren Hüllform 1 angeordnet wird, um durch die Positionierform 7 exakt ausgerichtet zu werden, wenn die obere Hüllform 2 der unteren Hüllform 1 angenähert wird. Der Führungsschacht 8 verhindert ein seitliches Abdriften der Hüllformen 1, 2 oder des Gegenstands 3 während des Schmelzvorgangs, da dieser in seinen lichten Abmessungen sehr genau auf die Außenmaße der Hüllformen abgestimmt ist. Nach dem Einbringen des zusammenhängenden Gebildes aus Hüllformen 1, 2 und Gegenstand 3 in den Führungsschacht 8, fahren zwei Stößelelemente 9 in den Führungsschacht 8 und beaufschlagen die erste und zweite Hüllform 1, 2 mit einer Druckkraft. Anschließend wird unter gleichbleibendem Druck eine Temperatur erzeugt, die das Material der Hüllformen 1, 2 zum Schmelzen bringt. Unter dem Druck und der Temperatur verschmelzen die beiden Hüllformen 1, 2 und schließen den Gegenstand 3 in sich ein.

Damit während des Press- und Einschweißvorgangs in der Fügenaht keine Luftblasen in dem weichen und aufgeschmolzenen Hüllformmaterial 1, 2 entstehen, kann in einer weiteren beispielhaften Ausführungsform vor oder während des Fügevorgangs ein Vakuum erzeugt werden, damit die Luft bzw. die Luftblasen entfernt werden können. Dadurch können zusätzlich die Spannungen in der Fügenaht reduziert werden, da sich dadurch das Vorhandensein von Lufteinschlüssen vermeiden lässt, welche ansonsten zu Zwangsspannungen führen.

In einer weiteren beispielhaften Ausführungsform können die Hüllformen 1, 2 und/oder der Gegenstand 3 rotationssymmetrisch ausgebildet sein. Dadurch kann eine Volumensymmetrie bezüglich der ersten Fügefläche 4 und/oder der zweiten Fügefläche 5 erzeugt werden, so dass identische Volumenanteile vorherrschen. Damit entsteht während der Druck- und Schmelzphase entlang der Fügenaht ein konstanter hydrostatischer Druck, so dass keine Querkräfte aufgrund des einwirkenden Druckes entstehen, die den Gegenstand 3 während des Fügevorgangs zum Verlassen seiner definierten Position veranlassen könnten.

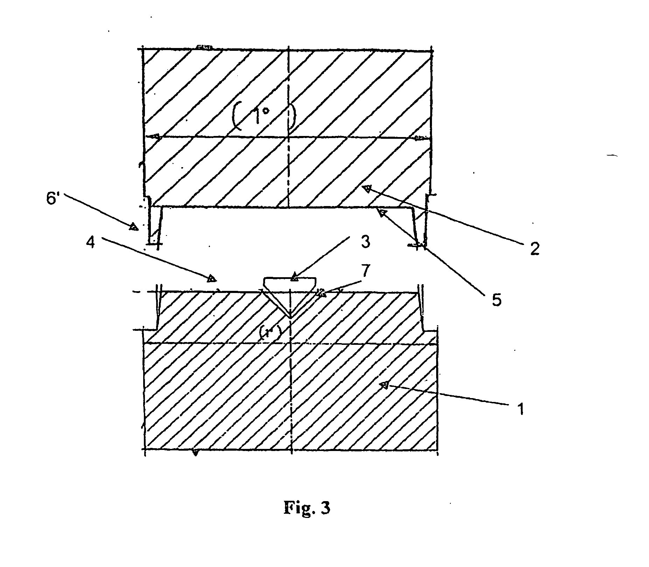

Die Fig. 3 zeigt eine weitere schematische Ansicht der ersten und zweiten Hüllform 1, 2. In dieser Ansicht ist der Gegenstand 3 in die Positionierform 7 in der ersten Fügefläche 4 der ersten Hüllform 1 eingebracht. Darüber hinaus ist die Erhebung der ersten Hüllform 1 wie auch der Rand 6' der zweiten Hüllform 2 konisch ausgebildet, womit eine Presspassung, bzw. ein Formschluss gebildet werden kann, der die beiden ersten und zweiten Hüllformen in der zusammengeführten Position verharren lässt und somit eine einfachere Handhabung der Hüllkörper und eine genauere Positionierung ermöglicht.

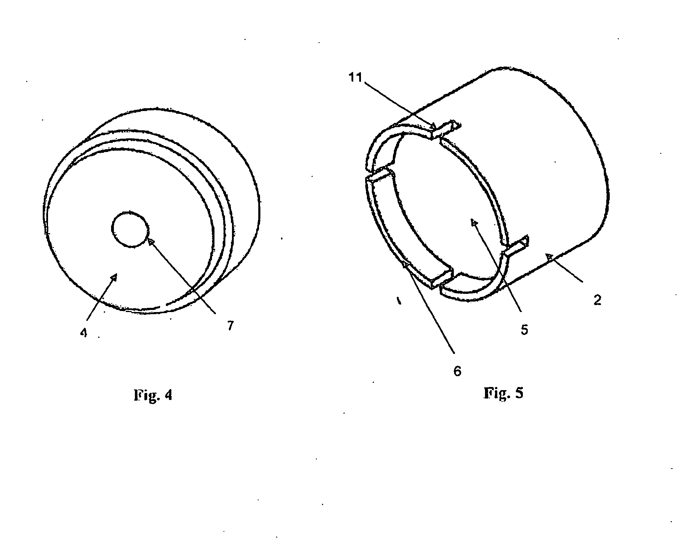

Die Fig. 4 zeigt eine dreidimensionale Ansicht der ersten Hüllform mit einer ersten Fügefläche 4, in der eine Positionierform 7 des Gegenstands bereitgestellt ist.

In Fig. 5 ist eine dreidimensionale Ansicht der zweiten Hüllform dargestellt, deren Rand 6 Öffnungen aufweist, durch die während des Press- und Schmelzvorganges vorhandene Luft entweichen lassen kann.

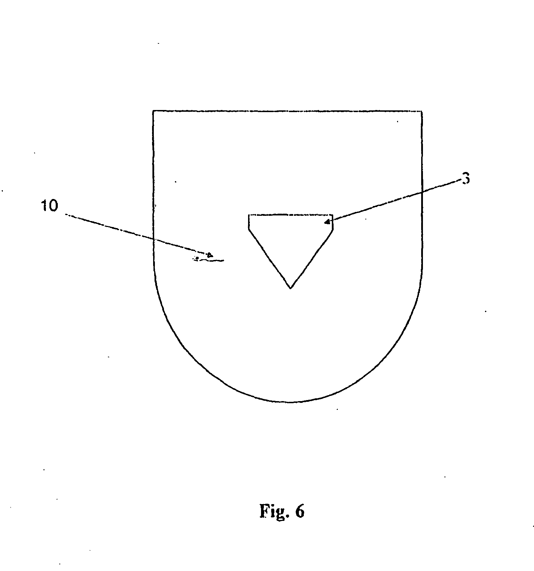

Die Fig. 6 zeigt schematisch ein durch das erfindungsgemäße Verfahren hergestelltes Produkt. Ein nach dem Schmelzen und Verpressen entstandener einteiliger Körper 10, umfasst dabei einen Gegenstand 3 wie beispielsweise ein Diamant. Im Anschluss an den Press- und Schmelzvorgang kann der aus den Hüllformen 1, 2 entstandener Körper 10 derart bearbeitet, beispielsweise gedreht und/oder poliert werden, dass ein bestimmter optischer Effekt, wie beispielsweise ein Vergrößerungs- oder Verkleinerungseffekt, mittels einer bestimmten Geometrie und Oberflächenausführung wie beispielsweise einer Dreh- und/oder Polierbearbeitung erzeugt wird. So wurde in dem in der Fig. 6 gezeigten Beispiel eine der Hüllformen mit einem Kuppelschliff versehen, welche durch Lichtbrechungseffekte den Gegenstand 3 nach außen hin größer in Erscheinung treten lässt.

Anstelle die Positionierung des Gegenstandes 3 im Bezug zur Außenkontur des Körpers 10 dadurch zu erreichen, dass der Gegenstand zentriert in einer definierten Position auf einer Fügefläche 4, 5 aufgebracht wird, kann dies auch durch eine nachträgliche Bearbeitung erfolgen, die derart gestaltet ist, dass das Material des Körpers 10 so um den Gegenstand 3 herum abgetragen wird, dass der Gegenstand 3 anschließend in einer definierten Position zur Außenkontur des Körpers 10 liegt.

## Patentansprüche

1. Herstellungsverfahren zum Einschließen eines Gegenstands (3) in einen mehrteiligen, zumindest teilweise transparenten Körper (1, 2), mit den folgenden Schritten:
Bereitstellen einer ersten Hüllform (1) mit einer ersten Fügefläche (4);
Bereitstellen einer zweiten Hüllform (2) mit einer zweiten Fügefläche (5);
Diamantieren der ersten und/oder zweiten Fügefläche;
Ausrichten des Gegenstands (3) auf der ersten Fügefläche (4) der ersten Hüllform ( 1 );
Zusammenführen der ersten Hüllform ( 1 ) und der zweiten Hüllform (2), so dass der Gegenstand (3) zwischen der ersten Fügefläche (4) und der zweiten Fügefläche (5) verharrt;
Verschmelzen der ersten Fügefläche (4) der ersten Hüllform (1) mit der zweiten Fügefläche (5) der zweiten Hüllform (2), indem die erste Fügefläche (4) und zweite Fügefläche (5) mit einer Druckkraft und einer Temperatur beaufschlagt werden, so dass die erste Hüllform (1) an der ersten Fügefläche (4) in die zweite Hüllform (2) an der zweiten Fügefläche (5) frei von einer sichtbaren Fügenaht übergeht; und
Bilden eines Vakuums vor dem Verschmelzen, so dass zwischen der ersten Hüllform (1) und der zweiten Hüllform (6) ein Lufteinschluss verhindert wird.

2. Herstellungsverfahren gemäß Anspruch 1, wobei der Gegenstand (3) in einer definierten Lage auf der ersten Fügefläche (4) ausgerichtet wird, so dass er beim Zusammenführen der ersten Hüllform ( 1 ) und der zweiten Hüllform (2) in dieser definierten Lage verharrt.

3. Herstellungsverfahren nach Anspruch 1 oder 2, ferner aufweisend:
Einlegen der ersten Hüllform (1), der zweiten Hüllform (2) und des Gegenstands (3) in einen Führungsschacht (8).

4. Herstellungsverfahren nach Anspruch 3, ferner aufweisend:
Einfahren zumindest eines Stößelelements (9) in den Führungsschacht (8),
wobei mittels des Einfahrens des zumindest einen Stößelelements (9) die Druckkraft auf die erste Hüllform ( 1 ) und die zweite Hüllform (2) aufgebracht wird.

5. Herstellungsverfahren nach Anspruch 4, wobei der Gegenstand (3) eine Fläche aufweist, die rechtwinklig zu einer Wandfläche des Führungsschachtes (8) ausgerichtet wird.

6. Herstellungsverfahren nach Anspruch 4 oder 5, wobei das Stößelelement (9) die Druckkraft parallel zur Wandfläche des Führungsschachts (8) erzeugt.

7. Herstellungsverfahren nach einem der vorangegangenen Ansprüche, wobei das Ausrichten des Gegenstands (3) erfolgt, indem der Gegenstand (3) mittels einer Positionierform (7) zur temporären Positionierung des Gegenstands (3) in der ersten Hüllform ( 1 ) oder der zweiten Hüllform (2) zentriert wird.

8. Herstellungsverfahren nach einem der vorangegangenen Ansprüche, ferner aufweisend:
Zentrieren des Gegenstands (3) auf der ersten Fügefläche (4) oder der zweiten Fügefläche (5);
wobei der Gegenstand (3) rotationssymmetrisch ausgebildet ist

9. Herstellungsverfahren nach Anspruch 7 oder 8, wobei der Gegenstand (3) bezüglich der ersten Fügefläche (4) der ersten Hüllform (1) und der zweiten Fügefläche (5) der zweiten Hüllform (2) in radialer Richtung volumensymmetrisch positioniert wird.

10. Herstellungsverfahren nach einem der vorangegangenen Ansprüche, ferner aufweisend:
Einarbeiten eines optischen Effekts in der ersten Hüllfläche der ersten Hüllform (1) und/oder in der zweiten Hüllfläche der zweiten Hüllform (2).

11. Herstellungsverfahren nach einem der vorangegangenen Ansprüche, ferner aufweisend:
Herstellen der ersten Hüllform ( 1 ) und der zweiten Hüllform (2) mittels eines Spritzgussverfahrens und/oder einer Drehbearbeitung.

12. Herstellungsverfahren nach einem der vorangegangenen Ansprüche, wobei die diamantierte Fügefläche eine plane, spiegelblanke, hochtransparente Oberfläche aufweist.

13. Herstellungsverfahren nach einem der vorangegangenen Ansprüche, wobei eine der beiden Hüllformen (1, 2) einen zumindest abschnittsweise umlaufenden Rand (6) aufweist;
wobei die andere Hüllform (2, 1 ) eine Erhebung aufweist, und
wobei die beiden Hüllformen derart zusammengeführt werden, dass der Rand (6) mit der Erhebung formschlüssig im Eingriff steht.

14. Herstellungsverfahren nach Anspruch 13, wobei zumindest eines der Elemente bestehend aus Rand (6) und Erhebung konisch ausgebildet werden.

15. Herstellungsverfahren nach Anspruch 13 oder 14, wobei der Rand (6) Öffnungen (11) zum Ziehen des Vakuums aufweist.

16. Herstellungsverfahren nach einem der vorangegangenen Ansprüche, wobei im Schritt des Verschmelzens die erste Hüllform (1) und die zweite Hüllform (2) derart erwärmt werden, dass sie einen teigigen Zustand einnehmen.

17. Transparenter Körper (10) mit einem eingeschlossenen dreidimensionalen Gegenstand (3), aufweisend:
eine erste Hüllform (1) mit einer ersten Fügefläche (4);
eine zweite Hüllform (2) mit einer zweiten Fügefläche (5), wobei die erste und/oder zweite Fügefläche diamantiert ist; und
den dreidimensionalen Gegenstand (3);
wobei die erste Fügefläche (4) der ersten Hüllform (1) derart ausgebildet ist, dass der dreidimensionale Gegenstand (3) auf der ersten Fügefläche (4) positioniert ist; und
wobei die erste Fügefläche (4) der ersten Hüllform (1) und die zweite Fügefläche (5) der zweiten Hüllform (2) derart zusammengefügt sind, dass ein Bereich zwischen den Hüllformen (1, 2) frei von einer sichtbaren Fügenaht ist;
wobei die erste Hüllform (1) und die zweite Hüllform (2) derart ausgebildet sind, dass vor dem Zusammendrücken ein Vakuum bereitstellbar ist, so dass mittels des Vakuums zwischen der ersten Hüllform (1) und der zweiten Hüllform (2) ein Lufteinschluss verhinderbar ist.

18. Körper (10) nach Anspruch 17, ferner aufweisend ein Befestigungselement zum Befestigen an einem Halterelement,
wobei das Halterelement aus der Gruppe bestehend aus Füllfederhalter, Stift, Uhr und Schmuck ausgewählt ist.

19. Körper (10) nach einem der Ansprüche 17 oder 18,
wobei der Körper (10) gemäß dem Verfahren nach einem der Ansprüche 1 bis 16 hergestellt ist.

## Claims

1. A production method for incorporating an object (3) in a multi-part body (1, 2) that is at least in part transparent, comprising the following steps:
providing a first enveloping body (1) with a first joining face (4);
providing a second enveloping body (2) with a second joining face (5);
diamond-polishing the first and/or the second joining face;
aligning the object (3) on the first joining face (4) of the first enveloping body (1);
bringing together the first enveloping body (1) with the second enveloping body (2) so that the object (3) remains between the first joining face (4) and the second joining face (5);
merging the first joining face (4) of the first enveloping body (1) to the second joining face (5) of the second enveloping body (2) in that the first joining face (4) and the second joining face (5) are subjected to a compressive force and a temperature so that the first enveloping body (1) on the first joining face (4) makes a transition to the second enveloping body (2) on the second joining face (5) free of any visible joining seam; and
forming a vacuum prior to merging, so that any air inclusion between the first enveloping body (1) and the second enveloping body (2) is prevented.

2. The production method according to claim 1, wherein the object (3) is aligned in a defined position on the first joining face (4) so that when the first enveloping body (1) is brought together with the second enveloping body (2) said object (3) remains in this defined position.

3. The production method according to claim 1 or 2, further comprising:
inserting the first enveloping body (1), the second enveloping body (2) and the object (3) into a guide shaft (8).

4. The production method according to claim 3, further comprising:
driving at least one plunger element (9) into the guide shaft (8),
wherein by means of driving the at least one plunger element (9) the compressive force is applied to the first enveloping body (1) and the second enveloping body (2).

5. The production method according to claim 4, wherein the object (3) comprises a face that is aligned so as to be at a right angle to a wall face of the guide shaft (8).

6. The production method according to claim 4 or 5, wherein the plunger element (9) generates the compressive force parallel to the wall face of the guide shaft (8).

7. The production method according to any one of the preceding claims, wherein alignment of the object (3) takes place in that the object (3) by means of a positioning mould (7) for temporary positioning of the object (3) is centred in the first enveloping body (1) or the second enveloping body (2).

8. The production method according to any one of the preceding claims, further comprising:
centring the object (3) on the first joining face (4) or the second joining face (5);
wherein the object (3) is designed so as to be rotationally symmetric.

9. The production method according to claim 7 or 8, wherein in relation to the first joining surface (4) of the first enveloping body (1) and the second joining face (5) of the second enveloping body (2) the object (3) is positioned in radial direction so as to be volume symmetric.

10. The production method according to any one of the preceding claims, further comprising:
incorporating a visual effect in the first enveloping face of the first enveloping body (1) and/or in the second enveloping face of the second enveloping body (2).

11. The production method according to any one of the preceding claims, further comprising:
producing the first enveloping body (1) and the second enveloping body (2) by means of an injection moulding method and/or rotary machining.

12. The production method according to any one of the preceding claims, wherein the diamond-polished joining surface comprises a flat, mirror-like, highly-transparent surface.

13. The production method according to any one of the preceding claims, wherein one of the two enveloping body (1, 2) comprises an at least partly circumferential edge (6);
wherein the other enveloping body (2, 1) comprises an elevation; and
wherein the two enveloping body are brought together in such a manner that the edge (6) engages the elevation in a positive-locking manner.

14. The production method according to claim 13, wherein at least one of the elements comprising the edge (6) and the elevation is designed so as to be conical.

15. The production method according to claim 13 or 14, wherein the edge (6) comprises openings (11) for drawing the vacuum.

16. The production method according to any one of the preceding claims, wherein during the step of merging, the first enveloping body (1) and the second enveloping body (2) are heated in such a manner that they assume a doughy state.

17. A transparent body (10) comprising an enclosed three-dimensional object (3), comprising:
a first enveloping body (1) with a first joining face (4);
a second enveloping body (2) with a second joining face (5), wherein the first and/or second joining face are/is diamond-polished; and
the three-dimensional object (3);
wherein the first joining face (4) of the first enveloping body (1) is designed in such a manner that the three-dimensional object (3) is positioned on the first joining face (4);
and wherein the first joining face (4) of the first enveloping body (1) and the second joining face (5) of the second enveloping body (2) are joined in such a manner that a region between the enveloping body (1, 2) is free of any visible joining seam;
wherein the first enveloping body (1) and the second enveloping body (2) are designed in such a manner that prior to pushing them together a vacuum can be provided so that by means of the vacuum any air inclusion between the first enveloping body (1) and the second enveloping body (2) is preventable.

18. The body (10) according to claim 17, further comprising a fastening element for fastening to a holder element,
wherein the holder element is selected from the group consisting of fountain pen, pen, watch and jewellery.

19. The body (10) according to one of claims 17 or 18,
wherein the body (10) is produced according to the method of any one of claims 1 to 16.

## Revendications

1. Procédé de fabrication pour inclure un objet (3) dans un corps (1, 2) en plusieurs parties, au moins partiellement transparent, comprenant les étapes suivantes :
préparation d'une première forme d'enveloppe (1) avec une première surface de jointoiement (4) ;
préparation d'une seconde forme d'enveloppe (2) avec une seconde surface de jointoiement (5) ;
rectification au diamant de la première et/ou de la seconde surface de jointoiement ;
orientation de l'objet (3) sur la première surface de jointoiement (4) de la première forme d'enveloppe (1) ;
réunion de la première forme d'enveloppe (1) et de la seconde forme d'enveloppe (2), de sorte que l'objet (3) reste entre la première surface de jointoiement (4) et la seconde surface de jointoiement (5) ;
fusion de la première surface de jointoiement (4) de la première forme d'enveloppe (1) avec la seconde surface de jointoiement (5) de la seconde forme d'enveloppe (2), la première surface de jointoiement (4) et la seconde surface de jointoiement (5) étant sollicitées par une force de pression et une température, de sorte que la première forme d'enveloppe (1) soit prolongée sur la première surface de jointoiement (4) sans joint visible par la seconde forme d'enveloppe (2) sur la seconde surface de jointoiement (5) ;
et
formation d'un vide avant la fusion, de sorte qu'une inclusion d'air est empêchée entre la première forme d'enveloppe (1) et la seconde forme d'enveloppe (6).

2. Procédé de fabrication suivant la revendication 1, dans lequel l'objet (3) est orienté dans une position définie sur la première surface de jointoiement (4), de sorte qu'il reste dans cette position définie lors de la réunion de la première forme d'enveloppe (1) et de la seconde forme d'enveloppe (2).

3. Procédé de fabrication suivant l'une des revendications 1 et 2, comprenant en outre : l'insertion de la première forme d'enveloppe (1), de la seconde forme d'enveloppe (2) et de l'objet (3) dans une gaine de guidage (8).

4. Procédé de fabrication suivant la revendication 3, comprenant en outre :
l'entrée d'au moins un élément de poussoir (9) dans la gaine de guidage (8),
la force de pression étant appliquée sur la première forme d'enveloppe (1) et sur la seconde forme d'enveloppe (2) par l'entrée du au moins un élément de poussoir (9).

5. Procédé de fabrication suivant la revendication 4, dans lequel l'objet (3) présente une surface orientée perpendiculairement à une surface d'une paroi de la gaine de guidage (8).

6. Procédé de fabrication suivant l'une des revendications 4 ou 5, dans lequel l'élément de poussoir (9) génère la force de pression parallèlement à la surface de la paroi de la gaine de guidage (8).

7. Procédé de fabrication suivant l'une des revendications précédentes, dans lequel l'orientation de l'objet (3) s'effectue par centrage de l'objet (3) au moyen d'une forme de positionnement (7), pour le positionnement temporaire de l'objet (3) dans la première forme d'enveloppe (1) ou dans la seconde forme d'enveloppe (2).

8. Procédé de fabrication suivant l'une des revendications précédentes, comprenant en outre :
le centrage de l'objet (3) sur la première surface de jointoiement (4) ou sur la seconde surface de jointoiement (5) ;
l'objet (3) présentant une symétrie de révolution.

9. Procédé de fabrication suivant l'une des revendications 7 ou 8, dans lequel l'objet (3) est positionné selon une symétrie de volume dans la direction radiale par rapport à la première surface de jointoiement (4) de la première forme d'enveloppe (1) et à la seconde surface de jointoiement (5) de la seconde forme d'enveloppe (2).

10. Procédé de fabrication suivant l'une des revendications précédentes, comprenant en outre :
la réalisation d'un effet optique dans la première surface d'enveloppe de la première forme d'enveloppe (1) et/ou dans la seconde surface d'enveloppe de la seconde forme d'enveloppe (2).

11. Procédé de fabrication suivant l'une des revendications précédentes, comprenant en outre :
la fabrication de la première forme d'enveloppe (1) et de la seconde forme d'enveloppe (2) par un procédé de moulage par injection et/ou un tournage.

12. Procédé de fabrication suivant l'une des revendications précédentes, dans lequel la surface de jointoiement diamantée présente une surface plane, à brillance de miroir et de haute transparence.

13. Procédé de fabrication suivant l'une des revendications précédentes, dans lequel l'une des deux formes d'enveloppe (1, 2) présente un bord (6) périphérique, au moins en section ;
l'autre forme d'enveloppe (2, 1) présentant un bossage, et
les deux formes d'enveloppe étant réunies de telle sorte que le bord (6) entre en prise par coopération de forme avec le bossage.

14. Procédé de fabrication suivant la revendication 13, dans lequel au moins l'un des éléments constitués du bord (6) et du bossage a une forme conique.

15. Procédé de fabrication suivant l'une des revendications 13 ou 14, dans lequel le bord (6) présente des ouvertures (11) pour la formation du vide.

16. Procédé de fabrication suivant l'une des revendications précédentes, dans lequel, dans l'étape de la fusion, la première forme d'enveloppe (1) et la seconde forme d'enveloppe (2) sont chauffées de telle sorte qu'elles prennent un état pâteux.

17. Corps transparent (10) avec un objet tridimensionnel (3) inclus comprenant :
une première forme d'enveloppe (1) avec une première surface de jointoiement (4) ;
une seconde forme d'enveloppe (2) avec une seconde surface de jointoiement (5), la première et/ou la seconde surface de jointoiement étant rectifiées au diamant ; et l'objet tridimensionnel (3) ;
corps transparent dans lequel,
la première surface de jointoiement (4) de la première forme d'enveloppe (1) est réalisée de telle sorte que l'objet tridimensionnel (3) est positionné sur la première surface de jointoiement (4) ; et
la première surface de jointoiement (4) de la première forme d'enveloppe (1) et la seconde surface de jointoiement (5) de la seconde forme d'enveloppe (2) sont réunies de telle sorte qu'une zone entre les formes d'enveloppe (1, 2) est exempte de joint visible ;
la première forme d'enveloppe (1) et la seconde forme d'enveloppe (2) sont réalisées de telle sorte qu'un vide est réalisable avant la réunion, de sorte qu'une inclusion d'air peut être empêchée entre la première forme d'enveloppe (1) et la seconde forme d'enveloppe (2) au moyen du vide.

18. Corps (10) suivant la revendication 17, comprenant en outre un élément de fixation pour la fixation sur un support,
le support étant sélectionné parmi le groupe constitué d'un stylo, d'une broche, d'une montre et d'un bijou.

19. Corps (10) suivant l'une des revendications 17 et 18, dans lequel le corps (10) et fabriqué suivant le procédé conforme à l'une des revendications 1 à 16.
